# EUROPÄISCHE PATENTSCHRIFT

(11) **EP 2 102 728 B1**
(45) Veröffentlichungstag und Bekanntmachung des Hinweises auf die Patenterteilung: **07.07.2010**
(21) Anmeldenummer: 07847499.6
(22) Anmeldetag: 29.11.2007
(51) Int. Cl.: G05B 23/02

(54) **VERFAHREN UND VORRICHTUNG ZUM DIAGNOSTIZIEREN DES ZUSTANDES EINES MASCHINENBAUTEILS**
METHOD AND DEVICE FOR DIAGNOSIS OF THE CONDITION OF A MACHINE COMPONENT
PROCÉDÉ ET DISPOSITIF POUR DIAGNOSTIQUER L'ÉTAT D'UNE PIÈCE DE MACHINE

(30) Priorität: 13.12.2006 DE 102006058689
(43) Veröffentlichungstag der Anmeldung: 23.09.2009
(73) Patentinhaber: KraussMaffei Technologies GmbH, 80997 München (DE)
(72) Erfinder: GRUENBACHER, Engelbert, 4840 Vöcklabruck (AT); PICHLER, Kurt, 4710 Tollet (AT); DEL RE, Luigi, 4040 Linz (AT)
(74) Vertreter: Wilhelm, Ludwig
(86) Internationale Anmeldenummer: PCT/EP2007/062982
(87) Internationale Veröffentlichungsnummer: WO 2008/071552

(56) Entgegenhaltungen:
- WO-A-01/01213
- US-A- 5 407 265
- US-A1- 2002 144 842

## Beschreibung

Die vorliegende Erfindung betrifft ein Verfahren und eine Vorrichtung zum Diagnostizieren des Zustandes eines Maschinenbauteils, insbesondere für kunststoffverarbeitende Maschinen.

Produktionsmaschinen und Werkzeugmaschinen, insbesondere kunststoffverarbeitende Maschinen, führen bestimmte - oft immer wiederkehrende - Tätigkeiten aus, wozu Teile und Einheiten bewegt und angetrieben werden. Solche Antriebe können elektrisch hydraulisch, pneumatisch oder Kombinationen davon sein. So können Konstant- oder Regelpumpen eingesetzt werden oder eine Antriebsbaugruppe kann direkt angetrieben werden. Allen Antrieben und beweglichen Teilen ist zu eigen, dass sie defekt werden können und einem Verschleiß unterliegen. Aus diesem Grunde werden technische Geräte in der Regel gewartet, um den Zustand solcher Verschleißteile zu prüfen und diese evtl. auszutauschen.

Verschleißerscheinungen können insgesamt zu einer Funktionsbeeinträchtigung und im Extremfall zu einer Funktionsunfähigkeit einer Maschine führen. Funktionsbeeinträchtigungen können in qualitativen Minderungen von Produkten resultieren, Funktionsstörungen gar in einem Stillstand der Maschine, so dass wertvolle Produktionszeit verloren geht.

Aus diesem Grunde ist es bereits seit einiger Zeit Ziel, Verfahren und Vorrichtungen zu entwickeln, mit denen man den Zustand von Maschine und Maschinenbauteilen beurteilen kann, um Maschinenausfälle zu vermeiden und - wenn möglich eine vorbeugende Wartung - zu initiieren. Insbesondere ist es wünschenswert, eine Aussage darüber treffen zu können, ob ein Maschinenbauteil einwandfrei funktioniert oder ob Störungen oder Fehlfunktionen vorliegen. Sollten Indizien vorliegen, welche darauf hinweisen, dass zwar das Funktionieren einer Maschine an sich noch nicht beeinträchtigt ist, jedoch mit einer baldigen Beeinträchtigung gerechnet werden kann, so sollten diese ebenfalls detektiert werden können. Solche Informationen könnten bei einer regelmäßigen Wartung abgefragt und das durch den drohenden Ausfall betroffene Teil ausgetauscht werden. Alternativ kann ein Signal erzeugt werden, wenn das Risiko für einen Maschinenstillstand einen gewissen Wert überschreitet oder einen inakzeptablen Wert erreicht, um eine Wartung zu initiieren.

Selbst dann, wenn eine Maschine oder ein Teil bereits ausgefallen ist, können die oben beschriebenen Informationen hilfreich sein, um unmittelbar den Ort und die Art der Funktionsstörung schnell und sicher herausfinden und das entsprechende Bauteil ersetzen zu können.

In diesem Zusammenhang sind eine Vielzahl von Vorrichtungen und Verfahren bekannt, die Sensoren zur Aufnahme von physikalischen oder chemischen Daten verwenden, die Information der Sensoren zu separaten Auswerteeinheiten weiterleiten, die komplexe Analysefunktionen durchführen und basierend auf einem Algorithmus ein Ergebnis angeben. Nicht nur die bisherigen Algorithmen und Analyseeinheiten für diese bekannten Methoden sind aufwändig und kostenintensiv, sondern zum Teil auch die Sensoren.

Diese hohen Kosten werden von den Erwerbern von kunststoffverarbeitenden Maschinen in der Regel nicht akzeptiert. Es ist daher ein Anliegen der vorliegenden Erfindung, eine Möglichkeit für eine vorausschauende Wartung anzugeben, die einfach und insbesondere kostengünstig ist, wobei mit ausreichender Sicherheit auf Funktionsstörungen in einem Bauteil geschlossen werden kann. US 5 407 265 beschreibt ein Verfahren zum Diagnostizieren des Zustandes eines Maschinenbauteils.

Diese Aufgabe wird durch die in den Ansprüchen 1 und 10 angegebenen Merkmale verfahrensmäßig bzw. vorrichtungsmäßig gelöst.

Grundsätzlich stützt sich die vorliegende Erfindung auf die Auswertung von Schwingungsdaten - also den Körperschall - von Funktionseinheiten, um den Zustand von Maschinen oder Maschinenbauteilen zu diagnostizieren. Dabei macht sich die Erfindung die Erkenntnis zunutze, dass ein irgendwie gearteter Verschleiß oder eine Abnormalität - z.B ein nicht im Normalbereich liegendes Spiel oder nicht im Normalbereich liegende Toleranzen - in bewegten Teilen bedingt, derart, dass die Teile in Folge in vom Normalwert abweichende Schwingungen versetzt werden. Die dabei ausgelösten Vibrationen werden über den Körperschall erfasst, analysiert und bewertet.

Die Vibrationen führen zu einem, sich insbesondere über die Zeit erstreckenden Schwingungsmuster, welches für das Bauteil sowie für den Zustand des Bauteils charakteristisch ist.

Führt man eine Spektralanalyse des Schwingungsmusters durch, erhält man ein Frequenzspektrum, in dem die Frequenzverteilung angegeben ist.

Nun sind die Erfassung von Körperschall sowie das Durchführen einer Spektralanalyse an sich seit langer Zeit bekannt. Ein wesentliches Element der vorliegenden Erfindung liegen darüber hinaus darin, dass bei ausgewählten Frequenzen die Signalenergie über einen bestimmten Frequenzbereich ermittelt wird. Diese Signalenergie gewinnt man durch Integration der Fläche und einer Hüllkurve, welche über das Frequenzspektrum in einem ausgewählten Frequenzbereichen gelegt wird.

Sodann wird nach der Ermittlung der den bestimmten Frequenzen zugehörigen Signalenergien eine mehrdimensionale Darstellung in einem mehrdimentionalen Frequenzraum erzeugt, wobei die Lage der gewonnenen Signalenergiespektren in den mehrdimensionalen Diagrammen den Zustand der Maschine oder Maschinenbauteile charakterisiert. Mit anderen Worten ausgedrückt, lässt sich einem mehrdimensionalen Teilbereichen aus dem gesamten Raum ein Maschinenzustand zuordnen. Durch Vorversuche kann ein Expertenwissen dahingehend aufgebaut werden, für die einzelnen Frequenzräumen jeweilige Maschinenzustände festzulegen. Sodann können die kontinuierlich über die Signalenergieerfassung generierten Ist-Zustände in mehrdimensionalen Frequenzräumen mit den vorgegebenen Werten verglichen werden. Aus diesem Vergleich lässt sich dann der gewünschte Rückschluss ziehen, in welchem Zustand sich das Maschinenbauteil befindet.

Damit kann der Zustand der Maschinen oder Maschinenbauteile, die möglicherweise hohe Anforderungen an die Verfügbarkeit haben, durch eine einfache Schwingungsdiagnose überwacht werden. Dieses sogenannte "Condition Monitoring" bietet die Möglichkeit, beispielsweise Pumpen, Spindeln, Getriebe, Führungen, Lagerungen oder Elektromotore an Maschinen zu überwachen.

Aufgrund der Zustandsbeurteilung der Maschinenbauteile wird eine Wartung planbar bzw. kann in die Wege geleitet werden. Damit sind die Folgekosten unplanmäßiger Stillstände reduziert und die Lebensdauer der Komponenten kann maximal ausgeschöpft werden. Es ist nicht mehr notwendig, Komponenten vorzeitig auszutauschen. Insgesamt lässt sich damit die Produktionseffizienz und die Maschinenzuverlässigkeit erhöhen.

Die Schäden lassen sich auf diese Weise auch nach Schadensart kategorisieren. Z. B. kann unterschieden werden in Wälzlagerschaden, Spindelschaden, Linearlagerschaden, Unwucht, Ausrichtfehler, Zahneingriff und Zahnfehler, Kavitation, stoßartige Überbelastung, Kolbenverschleiß, Gleitschuhverschleiß, Verschleiß von Steuerscheiben, etc.

Die Auswertung selbst ist unkompliziert und wenig aufwendig. Eine Auswerteeinrichtung kann integral mit einem Sensor in einer Gehäuseeinheit integriert sein. Alternativ können verschiedene Sensoren ihre Signale an eine gleiche Auswerteeinrichtung liefern. Als Sensoren können dabei Sensoren zur Erfassung axialer oder radialer Schwingungskomponenten, 1-dimensionale, 2-dimensionale oder 3-dimensionale Sensoren verwendet werden. Auch Drehschwingungen können analysiert werden.

Insgesamt kann mit der vorliegenden Erfindung eine modulare, intelligente, kompakte und preiswerte Vorrichtung zur Schwingungsdiagnose für eine vorhersagende Wartung angegeben werden.

Die Vorrichtung umfasst neben einem Geber insbesondere einen integrierten Vorverstärker, einen A/D-Wandler und einen Prozessor zur Frequenzanalyse und Verarbeitung. Überdies ist eine Hochgeschwindigkeitskommunikationsschnittstelle zur Echtzeitverarbeitung an der Auswerteeinheit bevorzugt. Mit einer solchen Schnittstelle kann die Vorrichtung in ein vernetztes Steuerungssystem eingebunden werden, so dass alle Informationen, die im Steuerungssystem und insbesondere intelligenten Subsystemen zur Verfügung stehen, verwendbar sind. Durch ein solches Netzwerk werden auch andere Sensordaten, wie z.B. Drehzahlen etc. - vorzugsweise in Echtzeit - für die Verarbeitung in der Sensorelektronik für die eigene Vorrichtung zugänglich.

Als Sensoren können kosteneffiziente einachsige Sensoren verwendet werden. Sollten für komplexe Anwendungen mehrere Schwingungsinformationen vonnöten sein, so können auch mehrachsige Sensoren verwendet werden oder vorzugsweise verschiedene einachsige Sensoren für eine mehrachsige Analyse miteinander vernetzt werden.

Es hat sich bei den durchgeführten Versuchen herausgestellt, dass sich in den meisten Fällen ein einachsiger mikromechanischer Beschleunigungssensor als Sensorelement eignet.

Die Auswertung erfolgt in einer integrierten digitalen Auswerteelektronik vorzugsweise in mehreren Stufen. Sollte das System variierend (z.B. mit variabler Drehzahl) betrieben werden, so sollte eine Normierung (z.B. Drehzahlnormierung) stattfinden. Ein dafür erforderliches Drehzahlsignal kann von extern über den vorgesehenen integrierten Netzwerkanschluss zur Verfügung gestellt werden.

Eine besonders bevorzugte Ausführungsform einer erfindungsgemäßen Vorrichtung ist dadurch gekennzeichnet, dass für die Daten und Energieübertragung ein einziger Anschluss der Vorrichtung verwendet wird. Beispielsweise eignen sich dazu Real Time Ethernet Schnittstellen, die rein softwaremäßig implementiert werden, wie der kürzlich vorgestellte Varan-Bus oder das Ethernet Powerlink der EPSG. Damit kann auf eine Bereitstellung des Drehzahlsignals durch einen lokalen Sensor und die damit verbundenen Kosten sowie die aufwändige Verkabelung verzichtet werden.

Eine weitere vorzugsweise Ausführungsform ist dadurch gekennzeichnet, dass zur Analyse und Speicherung der digitalisierten Daten sowie auch zur Bearbeitung des Kommunikationsprotokolls ein Field Programmable Gate Array (FPGA) eingesetzt wird. Herkömmlicherweise werden an dieser Stelle digitale Signalprozessoren für die Analyse und ein sogenannter ASIC für das Kommunikationsprotokoll verwendet. Die Verwendung eines FPGA für die Signalanalyse, Auswertung und Kommunikation ist jedoch kosteneffizient und gestattet es, die Prozessor- und Speicherkapazität für die unterschiedlichsten Anwendungen erst bei der endgültigen Inbetriebnahme anwendungsspezifisch festzulegen. So können bei einer Endband-Programmierung nicht nur die Steuerung sondern auch die erfindungsgemäßen Vorrichtungen programmiert werden. Die bei einer Maschine verbauten Vorrichtungen können dann nach der Endmontage im Rahmen des Einspielens der Software auf die Steuerung "mitprogrammiert" werden. Durch diesen flexiblen modularen Aufbau, beispielsweise bei nur einer Messachse, können überdies durch hohe Stückzahlen möglichst geringe Kosten sichergestellt werden.

Zur Analyse des aufgenommenen Schwingungsmusters wird eine Spektralanalyse, insbesondere eine Fourier-Transformation, vorzugsweise eine Fast-Fourier-Transformation verwendet. Die Signalenergie bestimmter Frequenzbereiche wird durch Anlegen einer Hüllkurve in diesen Frequenzbereichen und Integration der Fläche und der Hüllkurve ermittelt. Dabei wird zur Auswertung ein Zeitfenster, beispielsweise eine fixe Anzahl von Mess-Samples, vorgegeben und ein Frequenzfenster um die jeweils beobachtete Frequenz definiert. Für den mehrdimensionalen Frequenzraum können beispielsweise 2 -15 signifikante Frequenzen ausgewählt werden.

Die Wertefunktionen der Signalenergien und die ausgewählten Frequenzen werden mit den vorbestimmten Schwellwerten in dem mehrdimensionalen Frequenzraum verglichen. Diese vorbekannten Schwellwerte charakterisieren verschiedene Zustände wie Verschleiß- oder Störzustände, die aus der Analyse des Systems bekannt sind. Insofern sind die Zustände der Maschinenbauteile nicht durch eine Signalenergie bestimmt, sondern durch die Kombination einer Vielzahl von solchen Signalenergien.

Typischerweise wird der Eintritt eines Wartungsbedarfs durch ein mehrdimensionales Kriterium charakterisiert. Dabei kann die Auswertung sowohl in einer Auswerteelektronik eines Sensors als auch an zentraler Stelle für mehrere Sensoren vorgenommen werden. Überdies ist es möglich, die Signalenergiewerte von einem Sensor auf einen anderen zu übertragen und den Schwellwertvergleich für mehrere Achsen lokal in einem einzigen intelligenten Sensor zu bearbeiten. So kann die Maschinensteuerung von zusätzlichen Aufgaben entlastet werden.

Gemäß einer vorzugsweisen Ausführungsform kann von außen über eine IP-Schnittstelle auf den Speicher des FPGA zugegriffen werden. Diese Funktion kann dazu genutzt werden, um von der Bedieneinheit der Maschinensteuerung oder durch Fernwartung den Zustand des Bauteils abzurufen.

Neben der sogenannten vorausschauenden Wartung ist auch eine qualifizierende Inbetriebnahme möglich. So können bei der Inbetriebnahme einer Maschine zur Qualitätssicherung die Antriebskomponenten überprüft werden. Dazu kann vor der Inbetriebnahme der jeweilige Sensor mit seinem Konfigurationsprogramm versehen werden. Unzulässige Exemplarstreuung durch Fertigungsfehler oder eine fehlerhafte Montage sind so bereits vor einer Freigabe der Maschine feststellbar. Eventuelle anwendungsspezifische Programme können ebenfalls geladen werden. Bei der Inbetriebnahme selbst wird man aufgrund der Analyse und der Auswertung dann unmittelbaren Aufschluss darüber erhalten, inwiefern die Maschine Mängel aufweist und welcher Natur die Mängel sind.

Nachfolgend wird die vorliegende Erfindung anhand eines Ausführungsbeispiels und mit Bezug auf die beiliegende Zeichnung näher erläutert. Die Zeichnungen zeigen in
- Fig. 1: eine stark schematisierte Darstellung eines Versuchsaufbaus, bei dem Sensoren an einer hydraulischen Pumpe angeordnet sind, die Daten an eine Messeinrichtung abgeben,
- Fig. 2: den grundsätzlichen Aufbau des Verfahrens zur Diagnose eines Maschinenbauteils,
- Fig. 3: ein Schwingungsmuster über einen bestimmten Zeitraum,
- Fig. 4: ein durch Fourier-Transformation erhaltenes Frequenzmuster aus dem Schwingungsmuster aus Fig. 3,
- Fig. 5: einen Vergleich, wie sich die Frequenzverteilung zwischen einer neuen Pumpe und einer Pumpe mit axialem Spiel um eine bestimmte Frequenz ändert,
- Fig. 6: die Darstellung der Signalenergie als Integral unter der Hüllkurve für ein Frequenzfenster um eine charakteristische Frequenz
- Fig. 7: einen dreidimensionalen Frequenzraum, in dem die Signalenergien der ausgewählten Frequenzbereiche mit Zustandscharakterisierung angegeben ist
- Fig. 8: eine weitere Darstellung eines dreidimensionalen Frequenzraumes, in anderer Darstellungsweise und
- Fig. 9: eine weitere Darstellung eines dreidimensionalen Frequenzraumes mit verschiedenen Signalenergieverläufen.

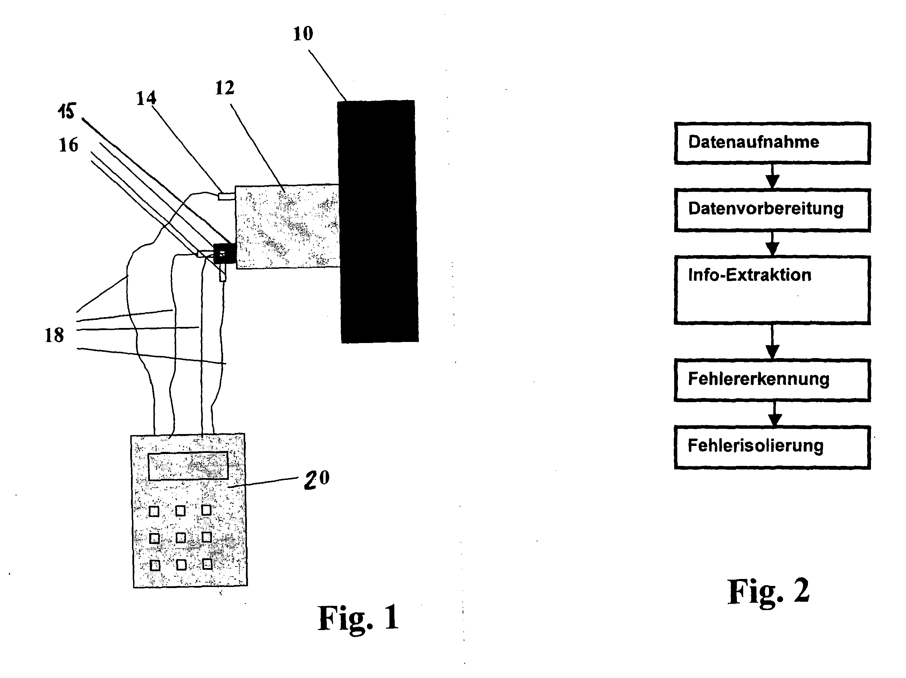

Bei den Arbeiten, die zur vorliegenden Erfindung führten, wurden Hydraulikpumpen mit verschiedenen Funktions- und Verschleißzuständen betrieben. An diesen Pumpen sind jeweils verschiedene Sensoren angeordnet, welche die beim Betrieb auftretenden Schwingungen erfassen. Dabei wird ein Versuchsaufbau wie in Fig. 1 vereinfacht dargestellt angewandt; eine Hydraulikpumpe 12 ist an einer Spritzgießmaschine 10 befestigt und wird betrieben. An der Hydraulikpumpe 12 sind ein 1-dimensionaler und ein 3-dimensionaler Sensor angeordnet, insbesondere der eindimensionale Sensor 14 sowie ein Messklotz 15, an dem drei eindimensionale Sensoren 16 zur Ausbildung eines insgesamt dreidimensionalen Sensors befestigt sind.

Von allen Sensoren 14 und 16 gehen Datenleitungen 18 zu einer Erfassungs- und Auswerteeinheit 20, mit der die von den Sensoren erfassten Schwingungsdaten aufgezeichnet und ausgewertet werden. Bei den verschiedenen getesteten Pumpen handelt es sich um a) eine neue Pumpe, b) eine bereits vorher betriebene und daher eingelaufene Pumpe, c) eine Pumpe mit eingebauter Störung in Form eines Axialspiels und d) eine Pumpe, die durch Störungen geschädigt worden waren. Die Auslösung der Schäden erfolgte durch Betrieb mit Luft im Öl und Drosselung des Löcköls. Beim Betrieb der jeweiligen Hydraulikpumpen werden gemäß Fig. 2 die Daten aufgenommen, die Daten in der noch zu beschreibenden Weise vorbereitet, Informationen extrahiert und daraus Fehler abgeleitet (Fehlererkennung, Fehlerisolierung).

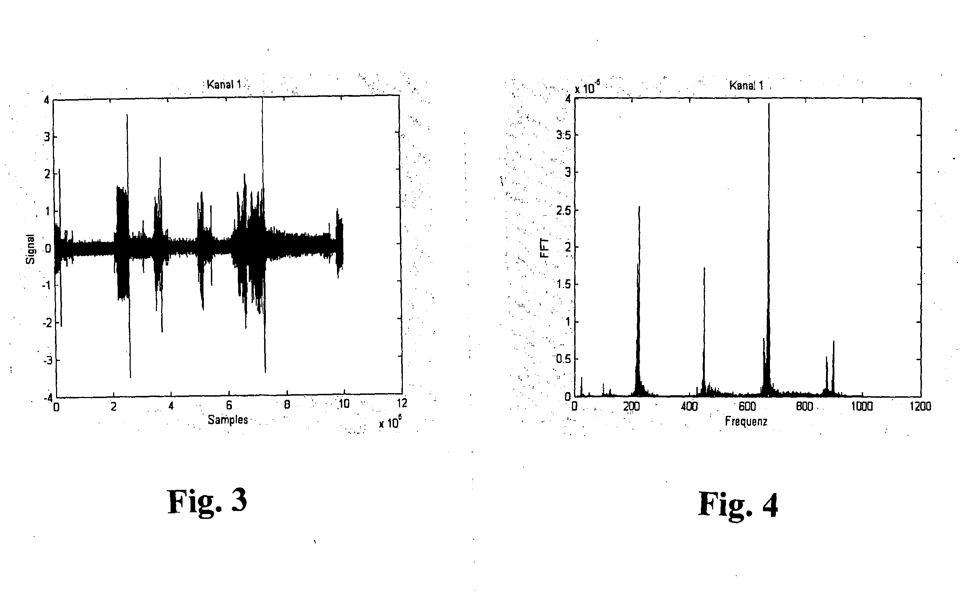

In einem ersten Schritt werden die Rohschwingungsdaten, beispielsweise der axialen Beschleunigung, über einen Zeitraum von 10 Sekunden erfasst. Die daraus resultierende Information ist in Fig. 3 dargestellt, wobei hier anstelle der Zeiteinheit die Anzahl von "Samples" angegeben ist.

Aus diesem Rohschwingungsdaten werden mittels Spektralanalysen Frequenzspektren erzeugt, wobei ein Fenster von 5 Sekunden Breite über das 10-Sekunden-Fenster des Rohsignals verschoben und in diskreten Abständen jeweils Spektralanalysen erzeugt werden.

Das Ergebnis einer solchen Spektralanalyse ist in Fig. 4 zu erkennen. In Fig. 4 ist für ein 5-Sekunden-Fenster die Frequenzverteilung, die aus einer Fast-Fourier-Transformation resultiert, angegeben.

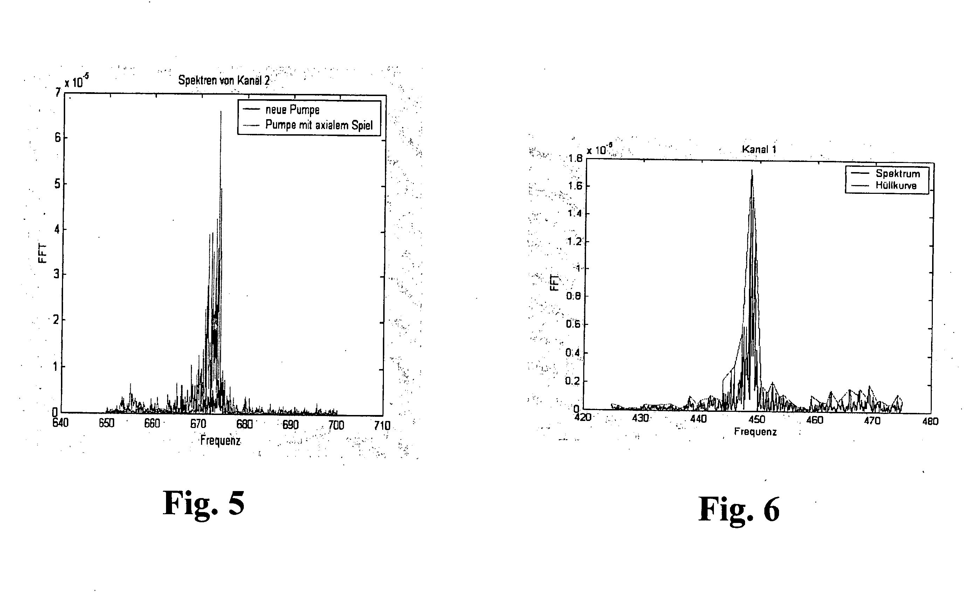

Dabei erkennt man, dass zu bestimmten Frequenzen hohe Werte (Peaks) vorliegen. Im weiteren Verlauf wurden für die vorliegende Ausführungsform drei signifikante Frequenzen herausgegriffen, nämlich 50 Hz, 450 Hz und 675 Hz. Um diese Frequenzen wurden mit einem Frequenzfenster von 50 Hz Hüllkurven gelegt (vgl. Fig. 6), die den jeweiligen Frequenzverlauf einhüllen. Nachfolgend wurde die Signalenergie bestimmt, die sich als Integral der Fläche unter der jeweiligen Hüllkurve darstellt.

Wie aus Fig. 5 zu erkennen ist, ändert sich die Signalenergie, also die Fläche unter der Hüllkurve je nach Zustand der Pumpe. So zeigt Fig. 5 zwei Frequenzspektren, nämlich dasjenige einer neuen Pumpe (schwarz mit niedrigen Werten) und dasjenige einer Pumpe mit axialem Spiel (grau mit hohen Werten). Damit ist klar, dass das letztere Frequenzspektrum eine wesentlich höhere Signalenergie besitzt.

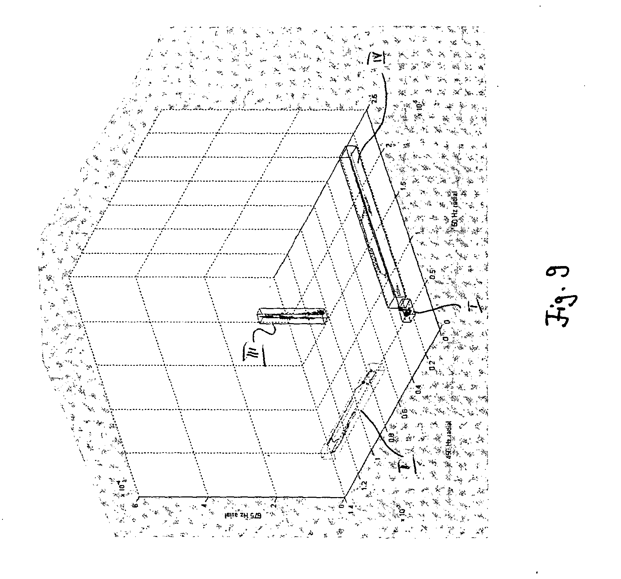

Die drei signifikanten Frequenzbereiche werden nun als Koordinatenachsen gewählt, wobei die Achswerte der jeweiligen Hüllkurvenenergie entsprechen. Je größer die Hüllkurve für eine entsprechende Frequenz ist, um so weiter liegt der entsprechende Punkt vom Koordinatenursprung auf der jeweiligen Achse entfernt. Aufgrund der verschiedenen Energien bei den jeweiligen Frequenzbereichen ergibt sich über die Messung ein Verlauf der Signalenergie in diesem mehrdimensionalen Frequenzraum. Bei Versuchen hat sich herausgestellt, dass sich die Signalenergiewerte je nach Pumpenzustand innerhalb eines Raumes in diesem mehrdimensionalen Gebilde bewegen. In Fig. 9 ist eine Auswertung dargestellt, wobei der Signalenergieverlauf in dem mit I) gekennzeichneten Kästchen der neuen Pumpe, der Signalenergieverlauf in dem mit II) bezeichneten Kästchen der eingelaufenen Pumpe, der Signalenergieverlauf in dem mit III) bezeichneten Kästchen der Pumpe mit axialem Spiel und der Signalenergieverlauf in dem mit IV) bezeichneten Kästchen der Pumpe mit Luft im Öl bzw. mit dem erhöhten Gehäusedruck entspricht.

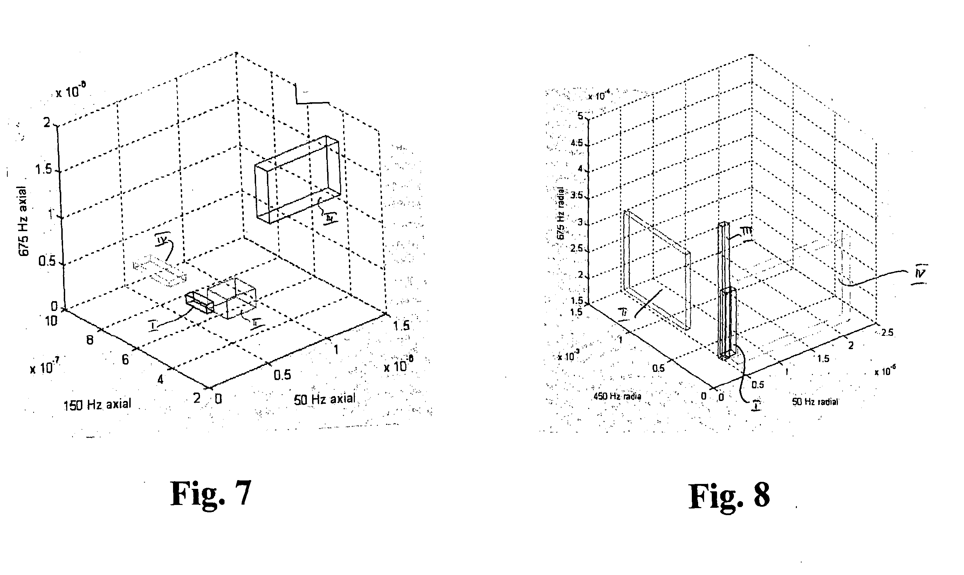

Bei der Verwendung eines eindimensionalen axialen Sensors haben sich die Werte wie in Fig. 7 dargestellt ergeben. Insbesondere entspricht das Kästchen mit I) dem Zustand einer neuen Pumpe, das Kästchen mit II) dem Zustand einer eingelaufenen Pumpe, das Kästchen mit III) dem Zustand einer Pumpe mit axialem Spiel und das Kästchen mit IV) dem Zustand einer Pumpe mit "Luft im Öl".

Bei der Verwendung eines radialen Sensors erhält man ein Ergebnis wie es in Fig. 8 dargestellt ist. Insbesondere stellt das Kästchen mit I) die neue Pumpe, das Kästchen mit II) eine eingelaufene Pumpe, das Kästchen mit III) eine Pumpe mit axialem Spiel und das Kästchen mit IV) eine Pumpe mit Luft im Öl dar.

Insgesamt ist jeweils zu erkennen, dass sich ein Pumpenzustand durch die Analyse mit den Signalenergien in unterschiedlicher Weise angeben lässt. Eine besonders gute Auflösung, ob eine Pumpe in Ordnung ist oder aber einen Fehler aufweist, ist vorliegend mit dem axialen Sensor möglich, wobei die Werte der neuen Pumpe sowie der eingelaufenen Pumpe - beide Pumpen sind in Ordnung - nahe beieinander liegen. Demgegenüber sind die beiden fehlerbehafteten Pumpen in anderen Signalenergieräumen angesiedelt.

Insofern ist es auf diese Weise möglich, bei der Veränderung der Signalenergien in diesem mehrdimensionalen Frequenzraum für eine Pumpe, beispielsweise aus den Bereichen der neuen oder eingelaufenen Pumpe hin in andere Raum-Bereiche, Fehlerzustände zu erkennen und die Art des Fehlers anzugeben. Natürlich ist es dazu erforderlich, die entsprechenden Fehlerzustände zu kennen, so dass ein Expertenwissen in diesem Bereich autzubauen ist. Dieses Expertenwissen kann beispielsweise dadurch aufgebaut erreicht werden, indem man verschiedene Fehlern herbeiführt oder detektiert und ihnen die damit einhergehenden Signalenergien zuweist. Das Expertenwissen muss natürlich bei den verschiedenen Einheiten, wie Hydraulikpumpe, elektrischer Antrieb, Lagerung etc. aufgebaut werden. Ist das Expertenwissen vorhanden, so kann man bei diesen Bauteilen sowohl bei der Inbetriebnahme wie auch im kontinuierlichen Lauf angeben, ob das System in Ordnung ist oder sich in einem Zustand befindet, der beispielsweise durch Abnutzung hervorgerufen ist und eventuell in Kürze zu einer Funktionsstörung führen würde.

Das soeben beschriebene Verfahren kann mit einer Vorrichtung durchgeführt werden, die in einem intelligenten Sensor kostengünstig untergebracht ist, wobei in dieser Vorrichtung sowohl der Geber, ein Vorverstärker, ein A/D-Wandler und ein Prozessor zur Frequenzanalyse und Verarbeitung sowie eine softwarebasierte Hochgeschwindigkeits IP Realzeit Schnittstelle vorgesehen sind.

Der Sensor weist vorzugsweise einen einzigen Steckeranschluss auf, mit dem man sowohl die Datenkommunikation wie auch die Energieversorgung über einen Echtzeitbus durchführen kann. Über einen solchen Busanschluss kann man nicht nur die im Sensor vorhandene Information im gesamten Netzwerk streuen, sondern auch Informationen aus dem Netzwerk für die Verarbeitung in dem Sensor bereitstellen. Auch ist es so möglich, verschiedene Geber mit einer Auswerteelektronik zu koppeln, so dass aus mehreren preiswerten einachsigen Beschleunigungssensoren ein mehrdimensional agierender Beschleunigungssensor geschaffen werden kann. Insgesamt wird mit dieser Ausgestaltung ein extrem flexibler modularer Aufbau sichergestellt. Dies um so mehr, wenn für die Auswerteelektronik ein Field Programmable Gate Array (FPGA) als Auswerteelektronik verwendet wird. Mit einem solchen Element kann man eine universelle Einheit herstellen, die erst bei der Inbetriebnahme in der erforderlichen Weise programmiert wird, wobei anwendungsspezifisch die Prozessor- und Speicherkapazität festgelegt wird. So ist es möglich, vor der Inbetriebnahme nicht nur die Steuerung mit dem entsprechenden Programm zu beschicken, sondern auch die entsprechenden Sensoren anwendungsorientiert zu programmieren.

## Patentansprüche

1. Verfahren zum Diagnostizieren des Zustandes eines Maschinenbauteils mit den Schritten:
Erfassen eines Schwingungsmusters des Maschinenbauteils zumindest über einen Zeitraum und Umwandlung des Schwingungsmusters in ein elektrisches Signal,
Durchführen einer Spektralanalyse aus dem elektrischen Signal,
Auswahl zumindest zweier charakteristischer Frequenzen mit Frequenzbereichen,
Erzeugen einer Hüllkurve für die aus der Spektralanalyse gewonnenen ausgewählten Frequenzen über die Frequenzbereiche,
Ermittlung der Signalenergien für jede Hüllkurve durch Integration der Flächen unter den Hüllkurven,
Einordnen der für jede Hüllkurve gewonnenen Signalenergien in einen mehrdimensionalen Frequenzraum, wobei die Dimensionalität des Frequenzraumes sowie die Achsen durch die Anzahl der Frequenzbereiche definiert sind,
Vergleich der Position oder Verläufe der Signalenergien im mehrdimensionalen Frequenzraum mit vorgegebenen Teilräumen aus dem mehrdimensionalen Frequenzbereich,
Erzeugen eines den Maschinenzustand kennzeichnenden Signals basierend auf dem Vergleichsergebnis.

2. Verfahren nach Anspruch 1,
**dadurch gekennzeichnet,**
**dass** das Schwingungsmuster über einen vorgegebenen Zeitbereich erfasst wird.

3. Verfahren nach Anspruch 1 oder 2,
**dadurch gekennzeichnet,**
**dass** die Spektralanalyse über vorgegebenen Zeitfenster durchgeführt wird.

4. Verfahren nach Anspruch 3,
**dadurch gekennzeichnet,**
**dass** das Zeitfenster in diskreten Zeitabständen über den Zeitbereich geführt wird und jeweils für jedes Zeitfenster eine Spektralanalyse durchgeführt wird.

5. Verfahren nach Anspruch 4,
**dadurch gekennzeichnet,**
**dass** die Spektralanalyse über eine vorgegebene Anzahl von Zeit- oder Sampelschritten erzeugt wird.

6. Verfahren nach einem der Ansprüche 1 bis 5,
**dadurch gekennzeichnet,**
**dass** eine Normierung des Schwingungsmusters oder der Spektralanalyse stattfindet.

7. Verfahren nach einem der vorhergehenden Ansprüche,
**dadurch gekennzeichnet,**
**dass** zur Spektralanalyse eine Fourier-Transformation, insbesondere eine Fast-Fourier-Transformation verwendet wird.

8. Verfahren nach einem der vorhergehenden Ansprüche,
**dadurch gekennzeichnet,**
**dass** 2 bis 15 verschiedene Frequenzbereiche verwendet werden.

9. Verfahren nach einem der vorhergehenden Ansprüche,
**dadurch gekennzeichnet,**
**dass** ein extern zugeführtes Signal zur Normierung, Bearbeitung des Schwingungsmusters oder der Frequenzen oder des Frequenzspektrums oder der Auswertung genutzt wird.

10. Vorrichtung zur Durchführung des Verfahrens nach einem der Ansprüche 1 bis 9 umfassend
zumindest einen Beschleunigungssensor zur Erfassung eines Körperschalls bzw. einer Körperschwingung,
- einen integrierten Vorverstärker
- einen A/D-Wandler
- eine digitale Auswerteelektronik mit einem Prozessor,
**dadurch gekennzeichnet,**
**dass** die Auswerteelektronik geeignet ist,
- aus einem Schwingungsmuster eine Spektralanalyse durchzuführen,
- zumindest zwei charakteristische Frequenzen mit Frequenzbereichen auszuwählen,
- für die aus der Spektralanalyse gewonnenen ausgewählten Frequenzen über die Frequenzbereiche eine Hüllkurve zu erzeugen,
- die Signalenergien für jede Hüllkurve durch Integration der Flächen unter den Hüllkurven zu ermitteln,
- die für jede Hüllkurve gewonnenen Signalenergien in einen mehrdimensionalen Frequenzraum einzuordnen, wobei die Dimensionalität des Frequenzraumes sowie die Achsen durch die Anzahl der Frequenzbereiche definiert sind,
- die Positionen oder Verläufe der Signalenergien im mehrdimensionalen Frequenzraum mit vorgegebenen Teilräumen aus dem mehrdimensionalen Frequenzbereich zu vergleichen und
- auf der Basis des Vergleichsergebnis ein den Maschinenzustand kennzeichnendes Signal zu erzeugen.

11. Vorrichtung nach Anspruch 10,
**dadurch gekennzeichnet,**
**dass** eine Kommunikationsschnittstelle für eine hohe Datenkommunikation vorgesehen ist.

12. Vorrichtung nach einem der Ansprüche 10 bis 11,
**dadurch gekennzeichnet,**
**dass** die Auswerteelektronik geeignet und ausgebildet ist, eine Normierung des Frequenzspektrums durchzuführen.

13. Vorrichtung nach einem der Ansprüche1 0 bis 12,
**dadurch gekennzeichnet,**
**dass** über die Kommunikationsschnittstelle ein Signal zur Verarbeitung des Frequenzspektrums zuführbar ist.

14. Vorrichtung nach Anspruch 13,
**dadurch gekennzeichnet,**
**dass** das Signal ein Drehzahlsignal ist.

15. Vorrichtung nach einem der Ansprüche 10 bis 14,
**dadurch gekennzeichnet,**
**dass** die Vorrichtung mittels der Kommunikationsschnittstelle in ein Netzwerk eingebunden ist.

16. Vorrichtung nach einem der Ansprüche 10 bis 15,
**dadurch gekennzeichnet,**
**dass** zur Anylase und Speicherung der Dateneine Field Programmable Gate Array (FPGA) eingesetzt ist.

17. Vorrichtung nach einem der Ansprüche 10 bis 16,
**dadurch gekennzeichnet**,
zur Datenkommunikation mit dem externen Netzwerk sowie zur Energieversorgung ein einziger Stecker verwendet wird.

## Claims

1. Method for diagnosis of the condition of a machine component with the steps:
recording a vibration pattern of the machine component at least over a period of time and conversion of the vibration pattern into an electrical signal,
carrying out a spectral analysis from the electrical signal,
selection of at least two characteristic frequencies with frequency ranges,
generation of an envelope curve for the frequencies selected from the spectral analysis over the frequency ranges,
determining the signal energies for each envelope curve by integration of the areas under the envelope curves,
arrangement of the signal energies obtained for each envelope curve into a multidimensional frequency space, wherein the dimensionality of the frequency space and the axes are defined by the number of frequency ranges,
comparison of the position or courses of the signal energies in the multidimensional frequency space with given partial spaces from the multidimensional frequency range,
generation of a signal characterizing the machine condition based on the comparison result.

2. Method according to Claim 1,
**characterized in that**
the vibration pattern is recorded over a given time domain.

3. Method according to Claim 1 or 2,
**characterized in that**
the spectral analysis is carried out over given time windows.

4. Method according to Claim 3,
**characterized in that**
the time window is directed in discrete time intervals over the time domain and in each case a spectral analysis is carried out for each time window.

5. Method according to Claim 4,
**characterized in that**
the spectral analysis is produced over a given number of time- or sample steps.

6. Method according to one of Claims 1 to 5,
**characterized in that**
a standardization takes place of the vibration pattern or of the spectral analysis.

7. Method according to one of the preceding claims,
**characterized in that**
a Fourier transformation, in particular a fast Fourier transformation, is used for the spectral analysis.

8. Method according to one of the preceding claims,
**characterized in that**
2 to 15 different frequency ranges are used.

9. Method according to one of the preceding claims,
**characterized in that**
an externally supplied signal is used for the standardization, processing of the vibration pattern or of the frequencies or of the frequency spectrum or the evaluation.

10. Device to carry out the method according to one of Claims 1 to 9 comprising
at least one acceleration sensor to detect a structure-borne sound or a structure-borne vibration,
- an integrated pre-amplifier
- an A/D converter
- digital evaluation electronics with a
processor,
**characterized in that**
the evaluation electronics are able
- to carry out a spectral analysis from a vibration pattern,
- to select at least two characteristic frequencies with frequency ranges,
- to generate an envelope curve for the selected frequencies obtained from the spectral analysis over the frequency ranges,
- to determine the signal energies for each envelope curve by integration of the areas under the envelope curves,
- to arrange the signal energies obtained for each envelope curve into a multidimensional frequency space, wherein the dimensionality of the frequency space and the axes are defined by the number of frequency ranges,
- to compare the positions or courses of the signal energies in the multidimensional frequency space with given partial spaces from the multidimensional frequency range and
- to generate a signal characterizing the machine condition on the basis of the comparison result.

11. Device according to Claim 10,
**characterized in that**
a communication interface is provided for a high data communication.

12. Device according to one of Claims 10 to 11, **characterized in that**
the evaluation electronics are able and constructed to carry out a standardization of the frequency spectrum.

13. Device according to one of Claims 10 to 12,
**characterized in that**
a signal for the processing of the frequency spectrum is able to be supplied via the communication interface.

14. Device according to Claim 13,
**characterized in that**
the signal is a rotation speed signal.

15. Device according to one of Claims 10 to 14,
**characterized in that**
the device is linked into a network by means of the communication interface.

16. Device according to one of Claims 10 to 15,
**characterized in that**
a field programmable gate array (FPGA) is used for the analysis and storage of the data.

17. Device according to one of Claims 10 to 16,
**characterized in that**
a single connector is used for data communication with the external network and for the energy supply.

## Revendications

1. Procédé pour diagnostiquer l'état d'une pièce de machine comprenant les étapes :
de saisie d'un modèle d'oscillation de la pièce de machine au moins sur une durée et la conversion du modèle d'oscillation en un signal électrique,
l'exécution d'une analyse spectrale à partir du signal électrique,
la sélection d'au moins deux fréquences caractéristiques avec des plages de fréquence,
la production d'une courbe enveloppe pour les fréquences sélectionnées sur les plages de fréquence issues de l'analyse spectrale,
le calcul des énergies de signal pour chaque courbe enveloppe par l'intégration des surfaces sous les courbes enveloppes,
le classement des énergies de signal prises pour chaque courbe enveloppe dans un espace de fréquences pluridimensionnel, sachant que la dimensionnalité de l'espace de fréquences ainsi que les axes sont définis par le nombre des plages de fréquence,
la comparaison de la position ou des tracés des énergies de signal dans l'espace de fréquences pluridimensionnel avec des espaces partiels prédéfinis provenant de la plage de fréquences pluridimensionnelle,
la production d'un signal identifiant l'état de la machine basé sur le résultat de la comparaison.

2. Procédé selon la revendication 1, **caractérisé en ce que** le modèle d'oscillation est saisi sur une plage temporelle prédéfinie.

3. Procédé selon la revendication 1 ou 2, **caractérisé en ce que** l'analyse spectrale est effectuée sur des fenêtres temporelles prédéfinies.

4. Procédé selon la revendication 3, **caractérisé en ce que** la fenêtre temporelle est effectuée à intervalles discrets sur la plage temporelle et qu'une analyse spectrale est effectuée respectivement pour chaque fenêtre temporelle.

5. Procédé selon la revendication 4, **caractérisé en ce que** l'analyse spectrale est produite sur un nombre prédéfini d'étapes temporelles ou d'échantillonnage.

6. Procédé selon l'une des revendications 1 à 5, **caractérisé en ce qu'**une mise à l'échelle du modèle d'oscillation ou de l'analyse spectrale a lieu.

7. Procédé selon l'une des revendications précédentes, **caractérisé en ce que** l'on emploie une transformée de Fourier, en particulier une transformée de Fourier rapide pour l'analyse spectrale.

8. Procédé selon l'une des revendications précédentes, **caractérisé en ce que** l' on emploie 2 à 15 plages de fréquence différentes.

9. Procédé selon l'une des revendications précédentes, **caractérisé en ce qu'**un signal amené de l'extérieur est utilisé pour la mise à l'échelle, le traitement du modèle d'oscillation ou des fréquences ou du spectre de fréquences ou de l'évaluation.

10. Dispositif pour exécuter le procédé selon l'une des revendications 1 à 9 comprenant au moins un capteur d'accélération pour détecter un bruit de structure respectivement une oscillation de structure,
- un pré-amplificateur intégré
- un convertisseur analogique/numérique
- une électronique d'évaluation numérique avec un processeur,
**caractérisé en ce que** l'électronique d'évaluation est adaptée pour
- effectuer une analyse spectrale à partir d'un modèle d'oscillation,
- sélectionner au moins deux fréquences caractéristiques avec des plages de fréquence,
- produire une courbe enveloppe pour les - fréquences sur les plages de fréquences sélectionnées issues de l'analyse spectrale,
- calculer les énergies de signal pour chaque courbe enveloppe par l'intégration des surfaces sous les courbes enveloppes,
- classer les énergies de signal prises pour chaque courbe enveloppe dans un espace de fréquences pluridimensionnel, sachant que la dimensionnalité de l'espace de fréquences ainsi que les axes sont définis par le nombre des plages de fréquence,
- comparer les positions ou les tracés des énergies de signal dans l'espace de fréquences pluridimensionnel avec des espaces partiels prédéfinis provenant de la plage de fréquences pluridimensionnelle,
- produire un signal identifiant l'état de la machine basé sur le résultat de la comparaison.

11. Dispositif selon la revendication 10, **caractérisé en ce qu'**une interface de communication est prévue pour une communication élevée de données.

12. Dispositif selon l'une des revendications 10 à 11, **caractérisé en ce que** l'électronique d'évaluation est appropriée et formée pour effectuer une mise à l'échelle du spectre de fréquences.

13. Dispositif selon l'une des revendications 10 à 12, **caractérisé en ce qu'**un signal peut être amené pour le traitement du spectre de fréquence, par le biais de l'interface de communication.

14. Dispositif selon la revendication 13, **caractérisé en ce que** le signal est un signal de régime.

15. Dispositif selon l'une des revendications 10 à 14, **caractérisé en ce que** le dispositif est intégré dans un réseau au moyen de l'interface de communication.

16. Dispositif selon l'une des revendications 10 à 15, **caractérisé en ce qu'**un circuit programmable Field Programmable Gate Array (FPGA) est employé pour l'analyse et l'enregistrement des données.

17. Dispositif selon l'une des revendications 10 à 16, **caractérisé en ce qu'**un seul connecteur est utilisé pour la communication de données avec le réseau externe ainsi que pour l'approvisionnement en énergie.
